# EUROPEAN PATENT SPECIFICATION

(11) **EP 3 278 512 B1**
(45) Date of publication and mention of the grant of the patent: **25.03.2020**
(21) Application number: 15887392.7
(22) Date of filing: 01.04.2015
(51) Int. Cl.: H04L 12/66, H04M 11/00, H04L 12/851

(54) **GATEWAY NODE, USER EQUIPMENT AND METHODS THEREIN FOR HANDLING AN INCOMING CALL TO THE USER EQUIPMENT**
GATEWAY-KNOTEN, BENUTZERGERÄT UND VERFAHREN DARIN ZUR HANDHABUNG EINES EINGEHENDEN ANRUFS AN DAS BENUTZERGERÄT
NOEUD DE PASSERELLE, ÉQUIPEMENT D'UTILISATEUR ET PROCÉDÉS DE GESTION MIS EN OEUVRE EN LEUR SEIN PERMETTANT DE GÉRER UN APPEL ENTRANT DE L'ÉQUIPEMENT D'UTILISATEUR

(43) Date of publication of application: 07.02.2018
(73) Proprietor: Telefonaktiebolaget LM Ericsson (publ), 164 83 Stockholm (SE)
(72) Inventor: VERMA, Mitu, Noida Uttar Pradesh 201304 (IN); MAHESHWARI, Piyush, Gurgaon 122001 (IN)
(74) Representative: Zacco Sweden AB
(86) International application number: PCT/IN2015/050027
(87) International publication number: WO 2016/157203

(56) References cited:
- EP-B1- 1 414 258
- WO-A1-2007/009497
- WO-A1-2015/024104
- 3gpp: "ETSI TS 122 067 V12.0.0, Digital cellular telecommunications system (Phase 2+); Universal Mobile Telecommunications System (UMTS); enhanced Multi Level Precedence and Pre-emption service (eMLPP); Stage 1", , 3 October 2014 (2014-10-03), pages 1-14, XP055457260, Retrieved from the Internet: URL:http://www.etsi.org/deliver/etsi_ts/12 2000_122099/122067/12.00.00_60/ts_122067v1 20000p.pdf [retrieved on 2018-03-07] & 3gpp: "ETSI TS 123 067 V12.0.0, Digital cellular telecommunications system (Phase 2+); Universal Mobile Telecommunications System (UMTS); enhanced Multi-Level Precedence and Pre-emption Service (eMLPP); Stage 2", , 17 December 2013 (2013-12-17), pages 1-26, XP055457741, Retrieved from the Internet: URL:http://www.etsi.org/deliver/etsi_ts/12 3000_123099/123067/12.00.00_60/ts_123067v1 20000p.pdf [retrieved on 2018-03-08]

## Description

### TECHNICAL FIELD

Embodiments herein relate to a gateway node, a first user equipment and methods therein. In particular, it relates to handling an incoming call to the first user equipment.

### BACKGROUND

Communication devices such as mobile stations are also known as e.g. mobile terminals, wireless terminals and/or User Equipments (UEs). Mobile stations are enabled to communicate wirelessly in a cellular communications network or wireless communication system, sometimes also referred to as a cellular radio system. The communication may be performed e.g. between two mobile stations, between a mobile station and a regular telephone and/or between a mobile station and a server via a Radio Access Network (RAN) and possibly one or more core networks, comprised within the cellular communications network.

Mobile stations may further be referred to as user equipments, terminals, mobile telephones, cellular telephones, or laptops with wireless capability, just to mention some further examples. The mobile stations in the present context may be, for example, portable, pocket-storable, hand-held, computer-comprised, or vehicle-mounted mobile devices, enabled to communicate voice and/or data, via the radio access network, with another entity, such as another mobile station or a server.

The cellular communications network covers a geographical area which is divided into cell areas, wherein each cell area is served by a base station, e.g. a Radio Base Station (RBS), which sometimes may be referred to as e.g. eNB, eNodeB, NodeS, B node, or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. One base station, situated on the base station site, may serve one or several cells. Further, each base station may support one or several communication technologies. The base stations communicate over the air interface operating on radio frequencies with the mobile stations within range of the base stations.

In some radio access networks, several base stations may be connected, e.g. by landlines or microwave, to a radio network controller, e.g. a Radio Network Controller (RNC) in Universal Mobile Telecommunications System (UMTS), and/or to each other.

In 3rd Generation Partnership Project (3GPP) Long Term Evolution (LTE), base stations, which may be referred to as eNodeBs or even eNBs, may be directly connected to one or more core networks.

Global System for Mobile Communications (GSM) is a standard developed by the European Telecommunications Standards Institute (ETSI) to describe protocols for second-generation (2G) digital cellular networks used by mobile phones.

UMTS is a third generation mobile communication system, which evolved from the Global System for Mobile Communications (GSM), and is intended to provide improved mobile communication services based on Wideband Code Division Multiple Access (WCDMA) access technology. UMTS Terrestrial Radio Access Network (UTRAN) is essentially a radio access network using wideband code division multiple access for mobile stations. The 3GPP has undertaken to evolve further the UTRAN and GSM based radio access network technologies. The evolution of UTRAN is commonly referred to as the Evolved-UTRAN (E-UTRAN) or LTE.

In the context of this disclosure, the expression DownLink (DL) is used for the transmission path from the base station to the mobile station. The expression UpLink (UL) is used for the transmission path in the opposite direction i.e. from the mobile station to the base station.

IP Multimedia Subsystem (IMS) is an architectural framework for delivering IP multimedia services and to provide the multimedia services over IP network for any type of access.

Currently, Enhanced Multi-Level Precedence and Preemption (EMLPP) services are used for prioritized calls. EMLPP is defined in 3GPP TS 122 067, version 12.0.0, TS 123 06 version 12.0.0, and TS 124 067, version 12.0.0. This feature provides different level of precedence for call set up and continuity. This is a feature of the Calling Party. In this feature, priority level depends on the Calling Party subscription.

As mentioned in the above 3GPP specifications of calls with EMLPP subscription based on the Calling Party subscription can have the following features: Faster Call Setup Time, Queuing Capabilities, Precedence Capabilities, and Pre-emption Capabilities.

Subscribers, who take EMLPP call subscription, do not suffer from call congestion and call drops which happen frequently in network for normal, i.e. non-EMLPP calls. When a call is identified as an EMLPP call, resources are reserved at all the nodes i.e. radio as well as core nodes, between the calling party and the called party, to provide the above mentioned functionalities and thus giving a better QoS to the subscribers.

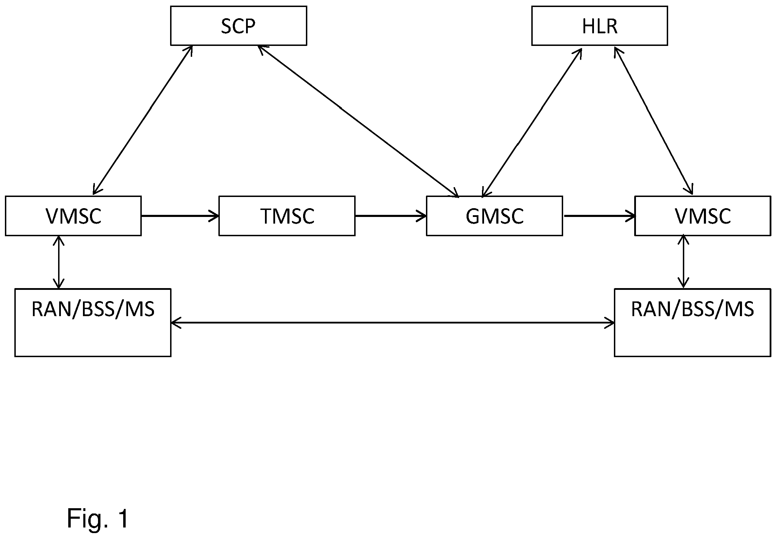

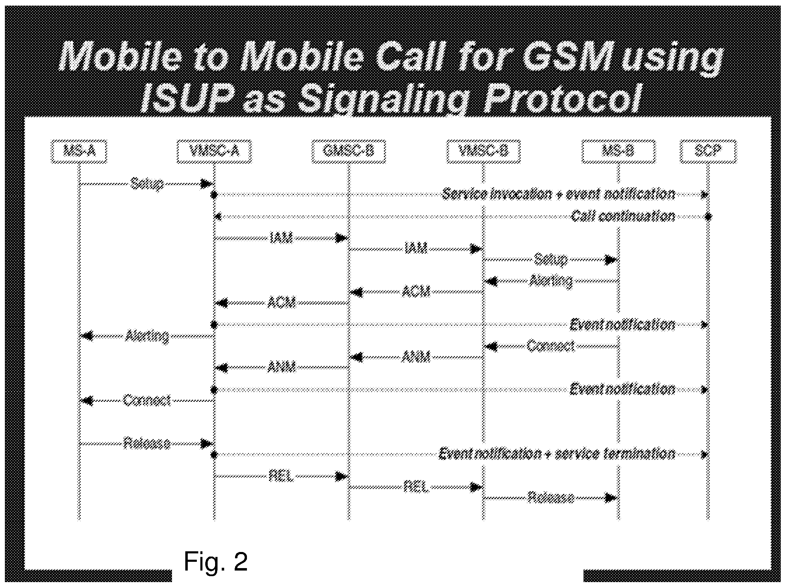

**Figure 1** and **Figure 2**: discloses a mobile to mobile call for prepaid subscribers in a GSM Network using Integrated Services Digital Network (ISDN) User Part (ISUP) as a signalling protocol.

A Mobile Station (MS)-A initiates an EMLPP call. It is a feature of the calling party, so from the beginning at BSC/RNC and also at Visited Mobile Switching Centre (VMSC)-A these calls are given better Quality of Service. In a call set up message, a priority parameter is present, which gives this call features like queuing capabilities, fast call set up, pre-emption, precedence, etc.

In figure 1 and 2,
SCP means Service Control Point,
HLR means Home Location Register,
GMSC means Gateway Mobile Switching Centre,
TMSC means Transit Mobile Switching Centre.
RAN means Radio Access Network,
BSS means Base Station Subsystem,
MS means Mobile Station,
IAM means Initial Address Message
ACM means Address Complete Message
ANM means Answer Message, and
REL means Release.

ISUP is a signalling protocol and is a part of the Signalling System No. 7 (SS7) which is used to set up telephone calls in the Public Switched Telephone Network (PSTN). At invocation of an EMLPP call for GSM technology using ISUP as the signalling protocol, information about the priority level of the call will be set in the calling party category element in an Initial Address Message (IAM) message and all the radio nodes as well as core nodes will perform the special handling of those calls based on the priority element flowing in the network. Based on the priority information received in the calling party category in the IAM message, Visited Mobile Switching Centre (VMSC) /Gateway Mobile Switching Centre (GMSC) of calling as well as called party's network, will give these calls all the features of EMLPP calls like queuing capabilities, fast call set up, pre-emption, precedence, etc. The VMSC is the Mobile Switching Centre (MSC) that is serving a mobile in a Visited Public Land Mobile Network (VPLMN). The GMSC is a special kind of MSC that is used to interrogate HLR to route calls in the terminating network.

This means that the EMLPP call will not be dropped by the network in case of network congestion as it is done with non-EMLPP or normal calls. Rather this call will be given higher priority over other calls coming to the same network. In case of network congestion, other calls or non EMLPP calls may be dropped and not queued. EMLPP calls can also do the pre-emption of already existing calls if the already existing call is of lower priority. Pre-emption of already existing calls means termination of already existing calls. Thus subscribers with EMLPP subscription will have better Quality of Service as compare to non-EMLPP subscribers such as normal subscribers.

Thus the EMLPP subscribers will not have to suffer much from call drops due to network congestion, etc. Due to the EMLPP subscription, these subscribers will have better Quality of Service as compare to non-EMLPP subscribers/normal subscribers. The same call flow will be applicable for the other technologies like 3G, 4G, and IMS using other signalling protocols like Session Initiation Protocol (SIP), etc.

In SIP, the priority information element may be carried in a Resource Priority Header. Thus different signalling protocols will use different ways to carry the priority information. But the concept remains the same; the priority information element will flow through the network to give the better QoS to the subscribers who have registered for EMLPP calls.

At invocation of the EMLPP in the call set up, the network notes the call priority related to the call and decides on the respective actions to be taken, for example, on queuing priority, fast call set-up procedures and pre-emption in case of congestion of network resources. In case of pre-emption, the network shall release the lowest lower priority call and seize the necessary resources that are required to set up the higher priority call.

Below Tables 1 and 2 are added to show how a priority element may be paced in a network in different messages.

### Connection Management (CM) service request message

A CM service request message is an example of a message sent by a mobile station to a network to request a service for connection management sublayer entities, e.g. circuit switched connection establishment, supplementary services activation, short message transfer, location services. See CM service request message content in Table 1 below.

**Table 1.**

| **IEI** | **Information Element** | **Presence** | **Format** | **Length** |
|---|---|---|---|---|
| | Mobility management protocol discriminator | M | V | ½ |
| | Skip Indicator | M | V | ½ |
| | CM Service Request message type | M | V | 1 |
| | CM service type | M | V | ½ |
| | Ciphering key sequence Number | M | V | ½ |
| | Mobile station Classmark | M | LV | 4 |
| | Mobile identity | M | LV | 2-9 |
| **8-** | **Priority (24.008)** | **O** | **TV** | **1** |

### IAM message

See IAM message content in Table 2 below.

**Table 2.**

| Parameter | Reference | Type | Length (octets) |
|---|---|---|---|
| Message type | 2.1 | F | 1 |
| Nature of connection indicators | 3.23 | F | 1 |
| Forward call indicators | 3.20 | F | 2 |
| **Calling party's category** | 3.9 | F | 1 |
| Transmission medium requirement | 3.35 | F | 1 |
| Called party number | 3.7 | V | 4-11 |
| Calling party number | | O | |
| Optional forward call indicators | 3.8 | O | 4-12 |
| | 3.25 | O | 3 |
| Closed user group interlock code | | | |
| | 3.13 | O | 6 |
| User-to-user information | | O | |
| Access transport | 3.38 | O | 3-131 |
| User service information | 3.2 | | 3-? |
| | 3.36 | O | 4-13 |
| **IEPS call information** | **3.103** | **O** | **6-8** |
| End of optional parameters | 3.17 | | 1 |

At time of high network traffic, chances are that normal calls meant for a subscriber at a terminating MSC may be dropped due to unavailability of resources. This is a very common problem in highly populated cities where the networks get frequently choked. Now there are subscribers who do not want to lose the calls coming to them and expect better Quality of Service.

The current EMLPP feature is a feature of the Calling Party and as such it is controlled by the calling party. A limitation of the EMLPP feature is that only some privileged subscribers have been provided this functionality such as e.g. some high profile government officials.

Related art within this technical field is disclosed e.g. in 3GPP TS 22.067 V12.0.0 Release 12, which describes an enhanced Multi Level Precedence and Pre-emption service, i.e. eMLPP, and priorities in Mobile originated calls, Mobile terminated calls, Mobile-to-mobile calls, Voice broadcast and Voice group calls, and in WO2015/02410, which describes prioritization of an incoming call based on the caller profile, wherein a caller profile may include a priority value.

Other related art is described in US6005870, which discloses assigning priority levels to calls and based on those priorities some special treatments will be given to calls like forwarding of those calls etc. In US6005870, it is not the called party but the calling party that has to enter an access code to gain the priority for a call. This document does not mention EMLPP calls. A disadvantage is that in US6005870, priority is not given based on called party's preference and even if it talks about priority it does not give EMLPP features like fast call setup, queuing, precedence, pre-emption etc., rather it talks about giving features like forwarding of those call etc.

### SUMMARY

It is therefore an object of embodiments herein to improve prioritization of calls in a wireless communications system.

According to a first aspect of embodiments herein, the object is achieved by a method performed by a gateway node, for handling an incoming call to a first user equipment. The gateway node is serving the first user equipment in a terminating network. The first user equipment is a called party of the incoming call.

The gateway node obtains information about whether or not the incoming call relates to a subscriber number that is comprised in a registered set of subscriber numbers registered by the first user equipment.

When the incoming call relates to a subscriber number that is comprised in the registered set of subscriber numbers, the gateway node converts the incoming call to an Enhanced Multi-level Precedence and Pre-emption service, EMLPP, call in the terminating network 101 at the gateway node. The EMLPP call is a prioritized call achieving priority features over other calls in the terminating network. The priority features comprises any one or more out of the following priority features:
- Faster Call Setup Time
- Queuing Capabilities
- Precedence Capabilities
- Pre-emption Capabilities

According to a second aspect of embodiments herein, the object is achieved by a method performed by a first user equipment, for receiving an incoming call from a second user equipment. The gateway node is serving the first user equipment in a terminating network. The first user equipment is a called party of the incoming call. The second user equipment is a calling party of the incoming call.

The first user equipment registers a set of subscriber numbers in a register, which set of subscriber numbers are selected by the first user equipment to be prioritized when the first user equipment is a called party.

The first user equipment receives an incoming call from the second user equipment via the gateway node. The incoming call gets converted to an EMLPP call in the terminating network from the gateway node when the incoming call relates to a subscriber number that is comprised in the registered set of subscriber numbers. The incoming call is not prioritized in an originating network between the second user equipment and the gateway node. The EMLPP call is a prioritized call achieving priority features over other calls in the terminating network. The priority features comprises any one or more out of the following priority features:
- Faster Call Setup Time
- Queuing Capabilities
- Precedence Capabilities
- Pre-emption Capabilities

According to a third aspect of embodiments herein, the object is achieved by a gateway node, for handling an incoming call to a first user equipment. The gateway node is arranged to be serving the first user equipment in a terminating network. The first user equipment is a called party of the incoming call. The gateway node is configured to obtain information about whether or not the incoming call relates to a subscriber number that is comprised in a registered set of subscriber numbers registered by the first user equipment. The gateway node is further configured to, when the incoming call relates to a subscriber number that is comprised in the registered set of subscriber numbers, convert the incoming call to an Enhanced Multi-level Precedence and Pre-emption service, EMLPP, call in the terminating network at the gateway node. The EMLPP call is a prioritized call achieving priority features over other calls in the terminating network. The priority features comprises any one or more out of the following priority features:
- Faster Call Setup Time
- Queuing Capabilities
- Precedence Capabilities
- Pre-emption Capabilities

According to a fourth aspect of embodiments herein, the object is achieved by a first user equipment for receiving an incoming call from a second user equipment. The gateway node is arranged to serve the first user equipment in a terminating network. The first user equipment is a called party of the incoming call. The second user equipment is a calling party of the incoming call.

The first user equipment is configured to register a set of subscriber numbers in a register. The set of subscriber numbers are arranged to be selected by the first user equipment to be prioritized when the first user equipment is a called party.

The first user equipment is configured to receive an incoming call from the second user equipment via the gateway node. The incoming call is arranged to get converted to an EMLPP call in the terminating network from the gateway node when the incoming call relates to a subscriber number that is comprised in the registered set of subscriber numbers. The incoming call is arranged to not be prioritized in an originating network between the second user equipment and the gateway node serving the first user equipment. The EMLPP call is arranged to be a prioritized call achieving priority features over other calls in the terminating network. The priority features comprises any one or more out of the following priority features:
- Faster Call Setup Time
- Queuing Capabilities
- Precedence Capabilities
- Pre-emption Capabilities

Since the gateway node obtains information about whether or not the incoming call relates to a subscriber number that is registered by the first user equipment being the called party, i.e. a number chosen by the called party, an incoming call can be converted to an EMLPP call in the terminating network 101 at the gateway node. This feature is controlled by the called party which was not possible according to prior art, and thus prioritization of calls in a wireless communications system has been improved and the called party has got a feature to provide a better QoS to the registered numbers.

Currently an EMLPP call is a feature of the calling party, so all the resources including radio and core resources for EMLPP are reserved at all the nodes both at the originating and the terminating network's side, but according to embodiments herein, no resources for EMLPP call will be reserved in the originating networks side. An incoming call will start like a normal mobile originating call, and it is only at the gateway node of terminating party's network and based on the terminating party's choice, the incoming call will be converted to an EMLPP call.

An advantage is that the EMLPP feature is which currently limited to only a few special subscribers, can according to embodiments herein become a feature of the common people.

A further advantage is that e.g. in a catastrophic situation or in case of some disaster, when the terminating network is overloaded, embodiments herein can ensure better success rate for a few important emergency numbers. That is, a called party can request for a better QoS to be provided to certain set of numbers in case of an emergency or disaster.

A yet further advantage is that it is a feature of the called party, so if the calls are coming to the subscribers from the selected numbers, which the Called Party has selected, then those calls will not have to suffer much from network congestion, dropping of calls, etc., because these calls will have all the features of the EMLPP calls like a) fast call set up, b) queuing capability, c) precedence, d) pre-emption, etc. Thus the called party has according to embodiments herein, the flexibility to get the better Quality of Service for certain set of numbers by registering them to the network.

### BRIEF DESCRIPTION OF THE DRAWINGS

Examples of embodiments herein are described in more detail with reference to attached drawings in which:
- Figure 1: is a schematic block diagram illustrating prior art.
- Figure 2: is a schematic block diagram illustrating prior art.
- Figure 3: is a schematic block diagram illustrating embodiments herein.
- Figure 4: is a flowchart depicting embodiments of a method in a gateway node.
- Figure 5: is a signalling diagram depicting embodiments of a method.
- Figure 6: is a flowchart depicting embodiments of a method in a user equipment.
- Figure 7: is a schematic block diagram illustrating embodiments herein.
- Figure 8: is a schematic block diagram illustrating embodiments herein.
- Figure 9: is a schematic block diagram illustrating embodiments of a gateway node.
- Figure 10: is a schematic block diagram illustrating embodiments of a user equipment.

### DETAILED DESCRIPTION

As part of developing embodiments herein, a problem will first be identified and shortly discussed.

As mentioned above, at time of high network traffic, chances are that normal calls meant for a subscriber at a terminating MSC may be dropped due to unavailability of resources. This is a very common problem in highly populated cities where the networks get frequently choked. Now there are subscribers of user equipments that do not want to lose the incoming calls meant for them and expect better Quality of Service. The current EMLPP feature is a feature of the calling party and as such it is controlled by the calling party.

A disadvantage of the EMLPP feature is that currently there is no control by the called party of the EMLPP feature. The EMLPP feature is not given based on the called party's preference, rather numbers of some special people such as e.g., a president of a country, etc. are given these features. Thus the calls coming from these special numbers will be treated as EMLPP calls in the network, thus it is the calling party's feature.

A further disadvantage is that resources are reserved from the originating network side including both originating core network and originating radio network, and also at the terminating network side including both terminating core network and terminating radio network, since the call has been identified as an EMLPP call right from the beginning when the calling party has originated the call e.g. by sending a 'cm_service_request' message.

Embodiments overcomes the disadvantages by providing a conversion of a normal mobile originating call to an EMLPP call, when the call reaches to the terminating network's gateway, based on the called party's preference(s). An advantage with the call only being an EMLPP call in the terminating network and not in the originating network is that this optimizes the resource usage.

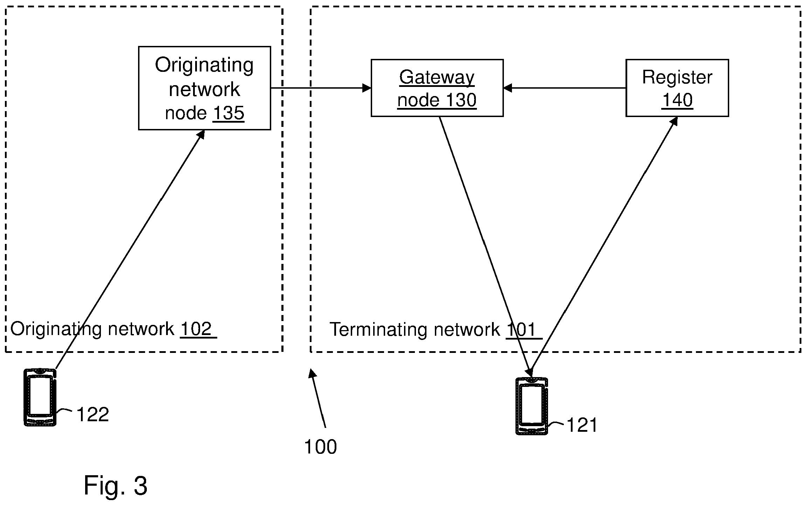

**Figure 3** depicts a **communications network 100** in which embodiments herein may be implemented. The communications network 100 may be a cellular communication network such as an IMS, LTE, WCDMA, GSM network, any 3GPP cellular network, or any cellular network or system.

Note that the communications network 100 in Figure 3 do not show all nodes in a communications network, only the nodes relevant for embodiments herein for simplicity.

In an example scenario of an incoming call from a calling party to a called party, the communications network 100 comprises **a terminating network 101**, and an **originating network 102.** The terminating network 101 comprises both terminating core network and terminating radio network of the called party. The originating network 102 comprises both originating core network and originating radio network of the calling party.

The called party is comprised in the terminating network 101, which called party is represented by a **first user equipment 121** in Figure 1 also referred to as UE 121 in the figures. The first user equipment 121 may be a mobile terminal, a wireless terminal, a mobile phone, a computer such as e.g. a laptop, Personal Digital Assistant (PDA), or tablet computers, sometimes referred to as surf plates, or any other radio network unit capable to communicate over a radio link in a cellular communications system.

The calling party is comprised in the originating network 102, which calling party is represented by a **second user equipment 122** in Figure 1 also referred to as UE 122 in the figures. The second user equipment 121 may be any kind of telephone that is associated with a subscriber number. For example it may be a mobile terminal, a wireless terminal, a mobile phone, a computer such as e.g. a laptop, Personal Digital Assistant (PDA), or tablet computers, sometimes referred to as surf plates, or any other radio network unit capable to communicate over a radio link in a cellular communications system. The second user equipment 121 may further be a Plain Ordinary Telephone Service (POTS) telephone, or any telephone relating to telephone services based on high-speed, digital communications lines, such as e.g. telephone related to Integrated Services Digital Network (ISDN).

The terminating network 101 further comprises a **gateway node 130** serving the first user equipment 121. The gateway node 130 may e.g. be a Gateway Mobile Services Switching Center (GMSC) node, a Gateway GPRS Support Node (GGSN), a Call Session Control Function (CSCF) node or packet gateway node. GPRS is the abbreviation for General Packet Radio Service.

The originating network 102, further comprises network nodes such as e.g. an **originating network node 135** serving the second user equipment 122. The originating network node 135 may e.g. be any gateway.

The gateway node 130 can communicate with or has access to a **register 140.** The first user equipment 121 can select prioritized subscriber numbers of its choice to be registered in the register 140. Thus the register 140 comprises a registered set of subscriber numbers registered by the first user equipment 121. The gateway node 130 can obtain information from the register 140 to see if an incoming call shall be prioritized. The register 140 may be comprised in a core network node such as a Service Control Point, SCP, node or a Home Subscriber Server, HSS.

According to embodiments herein, it is provided to the called party, such as the first user equipment 121, that of all the calls terminating to the called party, a certain set of numbers of called party's choice, also referred to as a priority group, will always have better Quality of Service, will be given preference over all other numbers, and will have all the features of the EMLPP calls like fast call up, queuing capability, pre-emption, precedence.

The called party such as the first user equipment 121 will register the numbers of its choice to the register 140 in the communications network 100. These numbers relate to subscribers of user equipments that the user of first user equipment 121 wishes to prioritize. When calls come from these numbers to the first user equipment 121 which have been registered by the called party, then these calls will not have to suffer much from call drops due to network congestion, etc., and will have all the features of the EMLPP calls When calls come from these numbers which have been registered by the called party, then these calls will not have to suffer much from call drops due to network congestion, etc., and will have all the features of the EMLPP calls like fast call up, queuing capability, pre-emption, precedence, etc. This means that the called party will get the numbers of its choice, also referred to as the priority group, registered to the register 140.

According to an example scenario, the calling party will such as the second user equipment 122, originate a normal Mobile Originated (MO) call, but at the gateway node 130, after HLR interrogation, and if the calling party is a member of the priority group set by the called party, the call will become an EMLPP call. It will have a priority parameter set in the underlying protocol, for example in a resource priority header in case of SIP or in a calling party category in case of ISUP, after this gateway node 130 of the terminating party's network.

According to embodiments herein, no resources are reserved at the originating network side. Originating party would not even know that the Call which has been originated by him is going to be an EMLPP Call. This is purely a terminating, i.e. called subscriber's feature. Thus the EMLPP feature which was initially limited to a few special subscribers such as e.g., President, Prime Minister, etc. will become a feature of the common people. The called party may be charged for this service by his/her operator. No resources are reserved in the calling party's network. The call will get converted to EMLPP call at the terminating party's network, so the special preference which is given to the EMLPP calls by prioritized resource reservation at both core and radio network side, will happen only at the terminating network's side. Thus it optimizes the resource usage at the originating network's side.

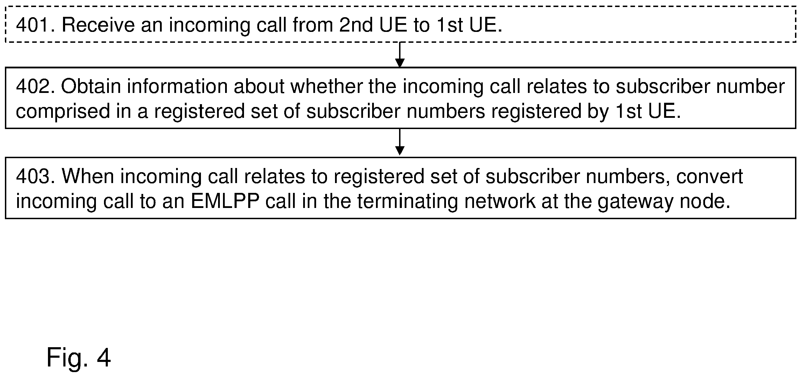

Embodiments of a method will first be described in a more general way in relation to Figures 4-6, which will be followed by a more detailed description of implementations and examples.

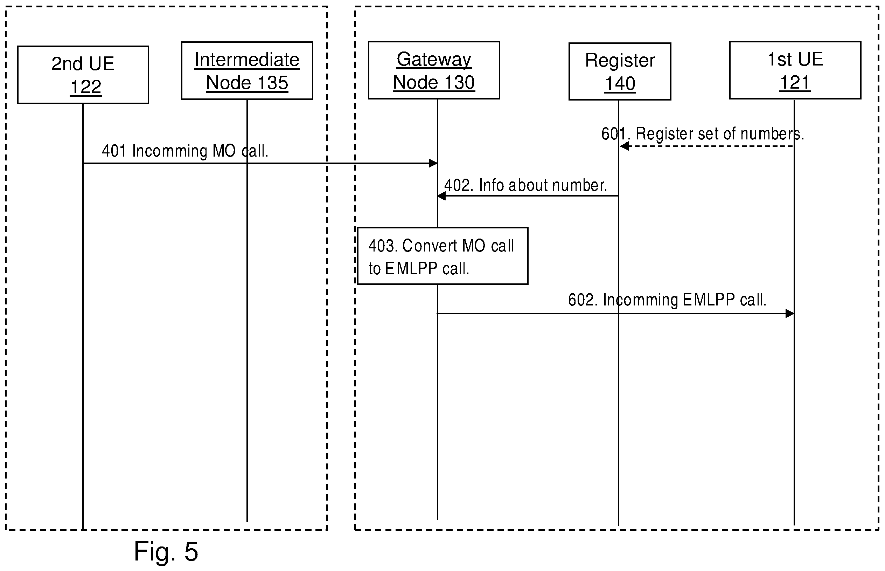

Example embodiments of a method performed by the gateway node 130, for handling an incoming call to the first user equipment 121, will now be described with reference to a flowchart depicted in **Figure 4** and a signalling scheme depicted in **Figure 5****.** This describes the exemplary method seen from the view of the gateway node 130. As mentioned above, the gateway node 130 is serving the first user equipment 121 in the terminating network 101, wherein the first user equipment 121 is a called party of the incoming call.

The method comprises the following actions, which actions may be taken in any suitable order. Dashed lines of one box in Figure 4 indicate that this action is not mandatory.

The called party such as the first user equipment 121, has registered a set of subscriber numbers of its choice to the register 140 in the communications network 100. These numbers relate to subscribers of user equipments that the user of first user equipment 121 wishes to prioritize. This will be described below under Action 601.

### Action 401

In an example scenario, the gateway node 130 receives an incoming call from the second user equipment intended for the first user equipment 121. The second user equipment 122 is a calling party. The incoming call is not prioritized in the originating network 102 between the second user equipment 122. As mentioned above, the gateway node 130 serving the first user equipment 121.

### Action 402

The gateway node 130 will check if the number of the incoming call is one of the numbers that the first user equipment 121 has chosen and registered to be prioritized. Thus, the gateway node 130 obtains information about whether or not the incoming call relates to a subscriber number that is comprised in a registered set of subscriber numbers registered by the first user equipment 121.

The information about whether or not the incoming call relates to a subscriber number that is comprised in the registered set of subscriber numbers, may be obtained from a core network node such as a Service Control Point (SCP) node, a Home Subscriber Server (HSS) or a Home Location register (HLR).

### Action 403

In this example, the gateway node 130 finds that the number of the incoming call is one of the numbers that the first user equipment 121 has chosen and registered to be prioritized. Thus, when the incoming call relates to a subscriber number that is comprised in the registered set of subscriber numbers, the gateway node 130 converts the incoming call to an EMLPP call in the terminating network 101 at the gateway node 130.

The incoming call may be an MO call in the originating network 102 which is converted to the EMLPP call in the terminating network 101.

The EMLPP call is a prioritized call achieving priority features over other calls in the terminating network 101. Note that the call may not achieve priority features over other emergency calls.

The priority features comprises any one or more out of the following priority features:
- Faster Call Setup Time
- Queuing Capabilities
- Precedence Capabilities
- Pre-emption Capabilities

In some embodiments, the converting of the incoming call to a prioritized call comprises setting a priority parameter in a message, which priority parameter indicates that the incoming call is a prioritized call and, sending the message through the terminating network to the first user equipment 121.

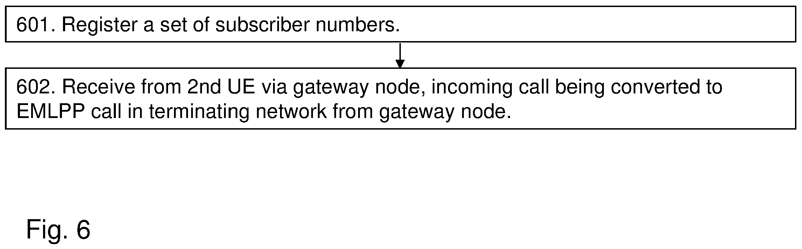

Example embodiments of a method performed by the first user equipment 121, for receiving an incoming call from a second user equipment 122, will now be described with reference to the signalling scheme depicted in **Figure 5** and a flowchart depicted in **Figure 6****.** As mentioned above, the gateway node 130 is serving the first user equipment 121 in the terminating network 101, wherein the first user equipment 121 is a called party of the incoming call and wherein the second user equipment 122 is a calling party of the incoming call.

The method comprises the following actions, which actions may be taken in any suitable order. Dashed lines of boxes in Figure 6 indicate that this action is not mandatory.

### Action 601

According to embodiments herein the method is feature of the called party. As mentioned above, the first user equipment 121 being the called party, selects a set of subscriber numbers. These subscriber numbers relate to subscribers of user equipments that the user of first user equipment 121 wishes to prioritize. Thus the first user equipment 121 registers a set of subscriber numbers in the register 140. The set of subscriber numbers are selected by the first user equipment 121 to be prioritized when the first user equipment 121 is a called party.

The set of subscriber numbers may be registered at a core network node such as for example a SCP node, a HSS or HLR or HLR.

### Action 602

The first user equipment 121 receives an incoming call from the second user equipment 122 via the gateway node 130. In this example, the gateway node 130 has found that the number of the incoming call is one of the numbers that the first user equipment 121 has chosen and registered to be prioritized. Thus, the incoming call gets converted to an EMLPP call in the terminating network 101 from the gateway node 130, when the incoming call relates to a subscriber number that is comprised in the registered set of subscriber numbers.

The incoming call may be a MO Call, from the second user equipment 122 to the gateway node 130, and which MO call is converted to the EMLPP call from the gateway node 130 to the first user equipment 121.

In some embodiments, the incoming call is not prioritized in an originating network 102 between the second user equipment 122 and the gateway node 130.

The EMLPP call is a prioritized call achieving priority features over other calls in the terminating network 101.

The priority features comprises any one or more out of the following priority features:
- Faster Call Setup Time
- Queuing Capabilities
- Precedence Capabilities
- Pre-emption Capabilities

Note that the call may not achieve priority features over other emergency calls.

Embodiment's herein will now be further described and explained. The text below is applicable to and may be combined with any suitable embodiment described above.

This means that the following embodiments are not mutually exclusive. Components from one embodiment may be tacitly assumed to be present in another embodiment and it will be obvious to a person skilled in the art how those components may be used in the other exemplary embodiments.

### Embodiments implemented in GSM

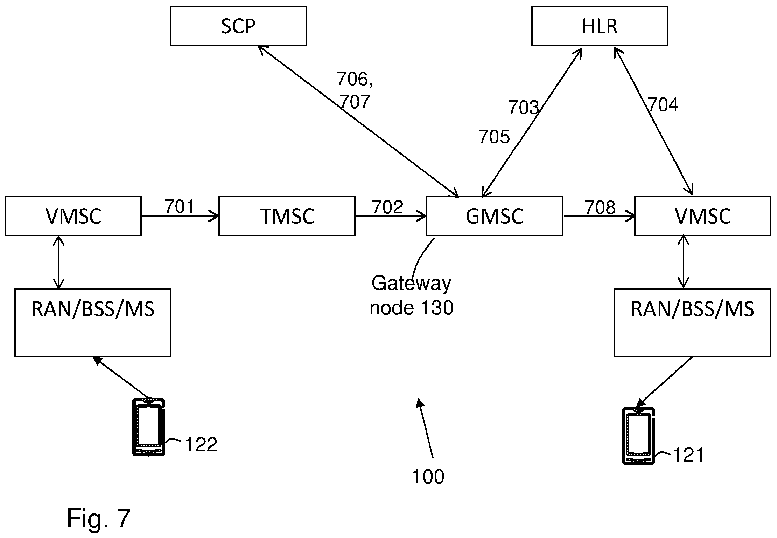

**Figure 7** discloses a conversion of normal mobile originated call to an EMLPP call based on the called party's preference for GSM technology according to embodiments herein.

When the subscriber of the first user equipment 121 register themselves for this service, an operator of the subscriber will enter a set of numbers of the subscriber's choice as a registered set of subscriber numbers also referred to as a priority group, in the register 140 which in these embodiments may be an SCP database. There may be several possible ways of implementation whereof one example is explained here. These numbers as chosen by the first user equipment 121 as being the called party may e.g. be stored in an SCP or a HLR or in the gateway node 140 itself, here being represented by e.g. a GMSC, a GGSN or a CSCF.

For example when an incoming call is received at the gateway node 130 here represented by a GMSC, if called party is CAMEL subscriber, at DP12 (termination_attempt_authorized) an Initial DP (IDP) will be sent to SCP. IDP means Initial detection point. CAMEL means Customized Application for Mobile Enhanced Logic and is a protocol.

The SCP will check in its data base, i.e. in the register 140 whether or not the second user equipment 122 being the called party is subscribed for this service. If yes, then it will check if the second user equipment 122 is a member of the Priority Group set by the Called Party, i.e. if the subscriber number of the second user equipment 122 is comprised in the registered set of subscriber numbers. If the calling party is a member of the Priority Group set by the Called Party, then the SCP will send a "Connect" message with a changed "Calling Party Category" which is a parameter in the ISUP protocol by which EMLPP calls are identified in the network.

So from here onwards, that is, after the terminating network's gateway node 130 here represented by the GMSC, the incoming call will become an EMLPP call. IAM from the GMSC to an intermediate VMSC node will have changed Calling Party Category parameter in the IAM message which is used for EMLPP Calls.

A flow diagram in Figure 7 illustrates a simple example using GSM technology and ISUP protocol. But the same concept is applicable to 3G, 4G and IMS technologies as well. SIP protocol may be used in the latter case and instead of GMSC, decision of conversion from normal to EMLPP calls will take place at the gateway node 130 here being represented by a GGSN or an SCSF.

The concept of the embodiments remains the same irrespective of the technology and the protocol being used. Depending upon different technologies, different protocols may be used to carry the priority information in the network. For example - in case of SIP a Resource- Priority Header may be used to carry the priority information in the communications network 100 and based on this parameter, a call will get the features of the EMLPP calls.

Some embodiments may relate to a CAMEL based service being applicable to roaming subscribers as well.
**Action 701.** The second user equipment 122 being the Calling Party, initiates a normal Mobile Originating Call. The Call follows the normal path from the radio side to the core network. No resource reservation takes places either at BSC/RNC or at VMSC/TMSC, that is, no resources are reserved at the originating network's side as it is a normal Mobile Originated Call.
**Action 702.** From Transit MSC of Calling Party's network, i.e. the originating network 102 to the gateway node 130 here represented by the GMSC of Called Party's network, the incoming call will flow like a normal Mobile Originating Call.
**Action 703.** At the gateway node 130 here represented by the GMSC, a Send Routing Information (SRI) message will be sent to the HLR using the Mobile Application Part MAP Protocol.
**Action 704.** The HLR will send a Provide Subscriber Information (PSI) message to the VMSC of the first user equipments network i.e. the called party's network referred to as the terminating network 101.
**Action 705.** VMSC of Called Party's network will send a PSI acknowledgement message to the HLR and after the HLR will send routing information of the Called Party in an SRI Acknowledgement message to the GMSC.
**Action 706.** At GMSC, at DP12, the Initial IDP message will be sent to the SCP.
**Action 707.** The SCP will check in the database, i.e. in the register 140 if the incoming call is coming from the number which has been registered as Priority Group numbers by the first user equipment being the called party. If it does then SCP will send a Connect message with the Calling Party Category changed to Priority Call to the GMSC.
**Action 708**. Now from here onwards the gateway node 130, i.e. the GMSC of the Called Party's network will set the parameter for the Priority call in the IAM message, that is, 'precedence' has to be set accordingly in the IAM message.

Thus the incoming call which has been originated like a normal Mobile originated call gets converted to EMLPP call. Since the parameters for the EMLPP calls are already set as per the protocol used, so these calls will get all the features of the EMLPP calls like a) Fast call set up, b) Queuing capability, c) Precedence, d) pre-emption, etc.

As mentioned in the existing implementation of the EMLPP calls, now the core network nodes as well as the radio nodes will do the special prioritizing handling of these calls in the terminating network 101. These calls will not have to suffer much from the Call Drops due to network congestion, etc. Thus these calls will have better Quality of Service as compare to other calls coming to the same network.

These calls will not be dropped by the network in case of network congestion, etc., rather these calls will be queued. In addition, these calls can do the pre-emption of the already existing calls, as these calls are carrying higher 'priority' as compare to normal calls.

### Embodiments implemented in IMS

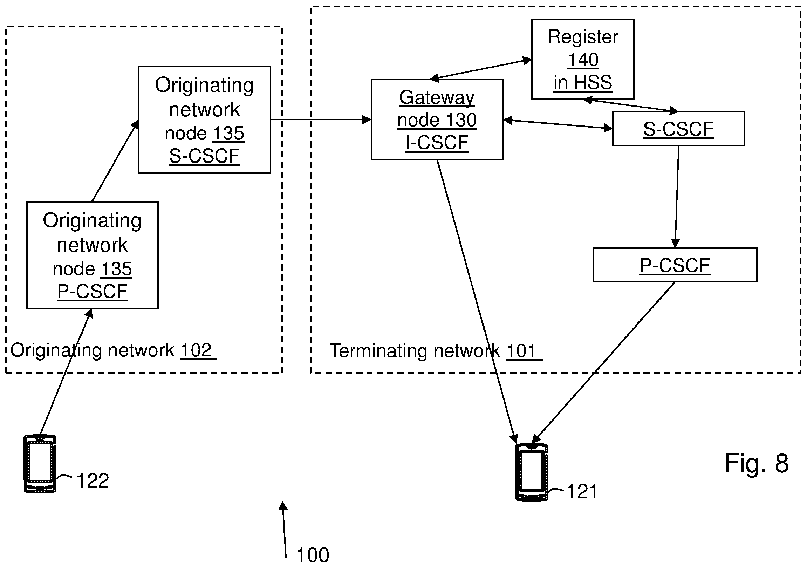

**Figure 8** discloses a conversion of normal MO call to EMLPP call based on the called party's preference implemented in IMS technology using SIP for carrying the priority information.

The second user equipment 122 being the calling party originates a normal MO call. An invite message will go from P-CSCF to S-CSCF in the originating network 102 just like a normal MO call. No prioritized resources are reserved in the originating network 102.

As soon as the incoming call comes to terminating network 101, the called party's network, the gateway node 130 which in these embodiments is represented by an I-CSCF will contact the HSS to get the S-CSCF information, Application part of S-CSCF or AS (Application Server) will use this information about whether the subscriber number of the second user equipment 122 is present in the set of subscriber numbers registered by the first user equipment 121. The information is obtained from the register 140 which in these embodiments is comprised in the HSS. Here in the S-CSCF, based on the Called Party's preference, i.e. the set of subscriber numbers registered by the first user equipment 121, the normal MO call will get converted to an EMLPP call. According to these embodiments, in the SIP invite message, priority information will be carried in a header of a Resource-Priority header and based on that this call will get all the features of the EMLPP call as specified in 3GPP TS 122 067, TS 123 067, and TS 124 067, which were mentioned in the Background section. So now these incoming calls will have a better QoS as they do not have to suffer much from Call Drops due to network congestion, etc. In addition, these incoming calls will have higher priority, so pre-emption of other calls of lower priority can also be done. These incoming calls will also have queuing capabilities, so in case of network congestion, these incoming calls will be queued by the network and it will not be dropped. Thus these incoming calls will be given a better Quality of Service as compare to other normal, i.e. non-EMLPP calls, based on called party's preference.

An advantage of embodiments herein is that it is completely a called party's feature as no prioritized resource reservation is taking place at the originating network side. This means that optimization of resource is provided. This optimizes the resource usage, as there is no resource reservation specific to the priority call that happens in the originating network 102.The calling party does not even know that the call is going to be converted to an EMLPP call. This conversion from normal call to an EMLPP call will take place only at the gateway node 130 of the terminating network 101 based on the called party's choice, i.e. the set of subscriber numbers registered by the first user equipment 121. So prioritized resource reservation will take place only at the terminating network's side.

The features of embodiments herein may e.g. be provided to an ordinary subscriber who register and pay for the service. It will be a feature of the Called Party who wants that calls coming from certain numbers should have better Quality of Service. These calls will not be dropped and will have a faster call set up time. Thus, the called party such as the first user equipment 121 will have a flexibility to gain a better QoS to the subscribers that it has already registered.

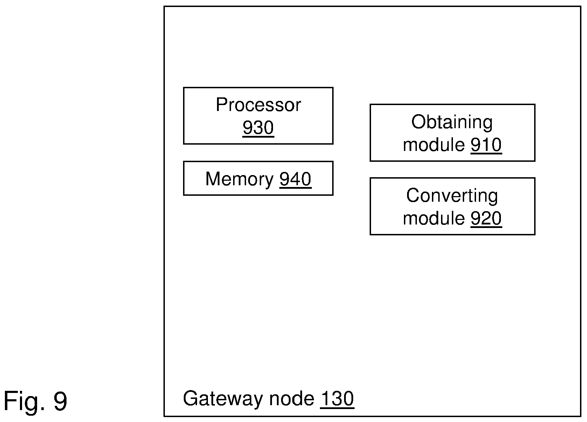

To perform the method actions for handling an incoming call to a first user equipment 121 described above in relation to Figure 4 and 5, the gateway node 130 may comprise the following arrangement depicted in Figure 9. As mentioned above the gateway node 130 is arranged to be serving the first user equipment 121 in the terminating network 101. The first user equipment 121 is a called party of the incoming call.

The gateway node 130 is configured to, e.g. by means of an obtaining module 910 configured to, obtain information about whether or not the incoming call relates to a subscriber number that is comprised in a registered set of subscriber numbers registered by the first user equipment 121.

The information about whether or not the incoming call relates to a subscriber number that is comprised in the registered set of subscriber numbers, may be arranged to be obtained from a core network node or a HSS.

The gateway node 130 is further configured to, e.g. by means of an converting module 920 configured to, when the incoming call relates to a subscriber number that is comprised in the registered set of subscriber numbers, convert the incoming call to an Enhanced Multi-level Precedence and Pre-emption service, EMLPP, call in the terminating network 101 at the gateway node 130. The EMLPP call is a prioritized call achieving priority features over other calls in the terminating network 101. The priority features comprises any one or more out of the following priority features:
- Faster Call Setup Time
- Queuing Capabilities
- Precedence Capabilities
- Pre-emption Capabilities

In some embodiments, the incoming call is a MO call. In these embodiments, the gateway node 130 is configured to, e.g. by means of the converting module 920 configured to, convert the incoming call to an EMLPP call by converting the MO call to an EMLPP call.

For example, the incoming call is arranged to be from a second user equipment 122 being a calling party and the incoming call is arranged to not be prioritized in an originating network 102 between the second user equipment 122 and the gateway node 130 serving the first user equipment 121.

The gateway node 130 may be configured to, e.g. by means of the converting module 920 configured to, convert the incoming call to a prioritized call by setting a priority parameter in a message, which priority parameter indicates that the incoming call is a prioritized call, and sending the message through the terminating network 101 to the first user equipment 121.

The embodiments herein comprising the process of handling an incoming call to a first user equipment 121, may be implemented through one or more processors, such as a processor 930 in the gateway node 130 depicted in Figure 9, together with computer program code for performing the functions and actions of the embodiments herein. The program code mentioned above may also be provided as a computer program product, for instance in the form of a data carrier carrying computer program code for performing the embodiments herein when being loaded into the gateway node 130. One such carrier may be in the form of a CD ROM disc. It is however feasible with other data carriers such as a memory stick. The computer program code may furthermore be provided as pure program code on a server and downloaded to the gateway node 130.

The gateway node 130 may further comprise a memory 940 comprising one or more memory units. The memory 940 comprises instructions executable by the processor 930.

The memory 940 is arranged to be used to store e.g. data, configurations, and applications to perform the methods herein when being executed in the gateway node 130.

Those skilled in the art will also appreciate that the modules in the gateway node 130, described above may refer to a combination of analog and digital circuits, and/or one or more processors configured with software and/or firmware, e.g. stored in the memory 940, that when executed by the one or more processors such as the processor 930 as described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

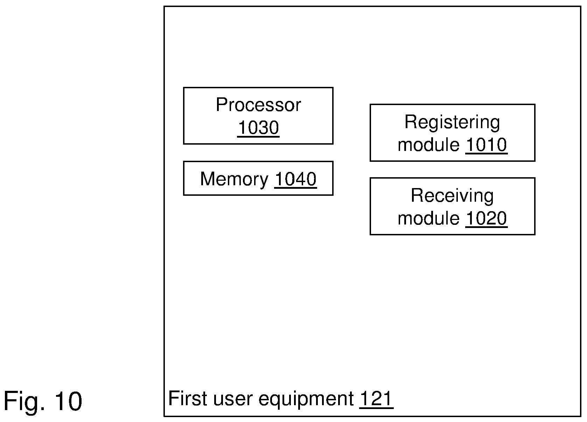

To perform the method actions for receiving an incoming call from a second user equipment 122 in relation to Figure 5 and 6, the first user equipment 121 may comprise the following arrangement depicted in **Figure 10****.** As mentioned above the gateway node 130 is arranged to serve the first user equipment 121 in the terminating network 101, the first user equipment 121 is a called party of the incoming call, and the second user equipment 122 is a calling party of the incoming call.

The first user equipment 121 is configured to, e.g. by means of an **registering module 1010** configured to, register a set of subscriber numbers in a register 140, which set of subscriber numbers are arranged to be selected by the first user equipment 121 to be prioritized when the first user equipment 121 is a called party.

The set of subscriber numbers may be registered at a core network node or a Home Subscriber Server, HSS.

The first user equipment 121 is further configured to, e.g. by means of a receiving module **1020** configured to, receive an incoming call from the second user equipment 122 via the gateway node 130. The incoming call is arranged to get converted to an EMLPP call in the terminating network 101 from the gateway node 130 when the incoming call relates to a subscriber number that is comprised in the registered set of subscriber numbers. The incoming call is arranged to not be prioritized in an originating network 102 between the second user equipment 122 and the gateway node 130 serving the first user equipment 121. The EMLPP call is arranged to be a prioritized call achieving priority features over other calls in the terminating network 101. The priority features comprises any one or more out of the following priority features:
- Faster Call Setup Time
- Queuing Capabilities
- Precedence Capabilities
- Pre-emption Capabilities

In some embodiments, the incoming call may be an MO Call from the second user equipment 122 to the gateway node 130, and the MO call is converted to the EMLPP call from the gateway node 130 to the first user equipment 121.

The embodiments herein comprising the process of receiving an incoming call from a second user equipment 122, may be implemented through one or more processors, such as a processor **1030** in the first user equipment 121 depicted in Figure 10, together with computer program code for performing the functions and actions of the embodiments herein. The program code mentioned above may also be provided as a computer program product, for instance in the form of a data carrier carrying computer program code for performing the embodiments herein when being loaded into the first user equipment 121. One such carrier may be in the form of a CD ROM disc. It is however feasible with other data carriers such as a memory stick. The computer program code may furthermore be provided as pure program code on a server and downloaded to the first user equipment 121.

The first user equipment 121 may further comprise the **memory 1040** comprising one or more memory units. The memory 1040 comprises instructions executable by the processor 1030.

The memory 1040 is arranged to be used to store e.g. data, configurations, and applications to perform the methods herein when being executed in the first user equipment 121.

Those skilled in the art will also appreciate that the modules in the first user equipment 121, described above may refer to a combination of analog and digital circuits, and/or one or more processors configured with software and/or firmware, e.g. stored in the memory 1040, that when executed by the one or more processors such as the processor 1030 as described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

When using the word "comprise" or "comprising" it shall be interpreted as non- limiting, i.e. meaning "consist at least of'.

The embodiments herein are not limited to the above described preferred embodiments. Various alternatives, modifications and equivalents may be used. Therefore, the above embodiments should not be taken as limiting the scope of the invention, which is defined by the appending claims.

## Claims

1. A method performed by a gateway node (130), for handling an incoming call to a first user equipment (121), which gateway node (130) is serving the first user equipment (121) in a terminating network (101), the method comprising:
*obtaining* (402) information about whether or not the incoming call relates to a subscriber number that is comprised in a set of subscriber numbers registered by the first user equipment (121),
when the incoming call relates to a subscriber number that is comprised in the set of subscriber numbers, *converting* (403) the incoming call to an Enhanced Multi-level Precedence and Pre-emption service, EMLPP, call in the terminating network (101) at the gateway node (130),
which EMLPP call is a prioritized call achieving priority features over other calls in the terminating network (101),
and which priority features comprise any one or more out of the following priority features:
- Faster Call Setup Time
- Queuing Capabilities
- Precedence Capabilities
- Pre-emption Capabilities

2. The method according to claim 1, wherein the incoming call is a Mobile Originating, MO, Call, and wherein *converting* (403) the incoming call to an EMLPP call comprises converting the MO call to an EMLPP call.

3. The method according to any of the claims 1-2, wherein the incoming call is not prioritized in an originating network (102) between the second user equipment (122) and the gateway node (130).

4. The method according to any of the claims 1-3, wherein *converting* (403) the incoming call to the EMLPP call comprises:
setting a priority parameter in a message, which priority parameter indicates that the incoming call is a prioritized call and,
sending the message through the terminating network to the first user equipment (121).

5. The method according to any of the claims 1-4, wherein the information about whether or not the incoming call relates to a subscriber number that is comprised in the registered set of subscriber numbers, is obtained from a core network node or a Home Subscriber Server, HSS.

6. A method performed by a first user equipment (121), for receiving an incoming call from a second user equipment (122), wherein the first user equipment (121) is served by a gateway node (130) in a terminating network (101), the method comprising:
*registering* (601) a set of subscriber numbers in a register (140), which set of subscriber numbers are selected by the first user equipment (121) to be prioritized when the first user equipment (121) is a called party, and
*receiving* (602) an incoming call from the second user equipment (122) via the gateway node (130), which incoming call gets converted to an EMLPP call in the terminating network (101) at the gateway node (130) when the incoming call relates to a subscriber number that is comprised in the set of subscriber numbers, and wherein the incoming call is not prioritized in an originating network (102) between the second user equipment (122) and the gateway node (130),
which EMLPP call is a prioritized call achieving priority features over other calls in the terminating network (101),
and which priority features comprise any one or more out of the following priority features:
- Faster Call Setup Time
- Queuing Capabilities
- Precedence Capabilities
- Pre-emption Capabilities

7. The method according to claim 6, wherein the incoming call is a Mobile Originating, MO, Call, to the gateway node (130), and which MO call is converted to the EMLPP call from the gateway node (130) to the first user equipment (121).

8. The method according to any of the claims 6-7, wherein the set of subscriber numbers are registered at a core network node, a Home Subscriber Server, HSS, or a Home Location register, HLR.

9. A gateway node (130), for handling an incoming call to a first user equipment (121), which gateway node (130) is arranged to be serving the first user equipment (121) in a terminating network (101), and the gateway node (130) is configured to:
obtain information about whether or not the incoming call relates to a subscriber number that is comprised in a registered set of subscriber numbers registered by the first user equipment (121),
when the incoming call relates to a subscriber number that is comprised in the registered set of subscriber numbers, convert the incoming call to an Enhanced Multi-level Precedence and Pre-emption service, EMLPP, call in the terminating network (101) at the gateway node (130),
which EMLPP call is a prioritized call achieving priority features over other calls in the terminating network (101),
and which priority features comprise any one or more out of the following priority features:
- Faster Call Setup Time
- Queuing Capabilities
- Precedence Capabilities
- Pre-emption Capabilities

10. The gateway node (130) according to claim 9, wherein the incoming call is a Mobile Originating, MO, Call, and wherein the gateway node (130) is configured to:
convert the incoming call to an EMLPP call by converting the MO call to an EMLPP call.

11. The gateway node (130) according to any of the claims 9-10, wherein the incoming call is arranged to be from a second user equipment (122) being a calling party, and wherein the incoming call is arranged to not be prioritized in an originating network (102) between the second user equipment (122) and the gateway node (130).

12. The gateway node (130) according to any of the claims 9-11, the gateway node (130) being configured to convert the incoming call to a prioritized call by:
setting a priority parameter in a message, which priority parameter indicates that the incoming call is a prioritized call and,
sending the message through the terminating network to the first user equipment (121).

13. The gateway node (130) according to any of the claims 9-12, wherein the information about whether or not the incoming call relates to a subscriber number that is comprised in the registered set of subscriber numbers, is arranged to be obtained from a core network node, a Home Subscriber Server, HSS, or a Home Location register, HLR.

14. A first user equipment (121) for receiving an incoming call from a second user equipment (122), wherein the first user equipment (121) is arranged to be served by a gateway node (130) in a terminating network (101), and the first user equipment (121) is configured to:
register a set of subscriber numbers in a register (140), which set of subscriber numbers are arranged to be selected by the first user equipment (121) to be prioritized when the first user equipment (121) is a called party, and
receive an incoming call from the second user equipment (122) via the gateway node (130), which incoming call is arranged to get converted to an EMLPP call in the terminating network (101) at the gateway node (130) when the incoming call relates to a subscriber number that is comprised in the set of subscriber numbers, and wherein the incoming call is arranged to not be prioritized in an originating network (102) between the second user equipment (122) and the gateway node (130),
which EMLPP call is arranged to be a prioritized call achieving priority features over other calls in the terminating network (101),
and which priority features comprise any one or more out of the following priority features:
- Faster Call Setup Time
- Queuing Capabilities
- Precedence Capabilities
- Pre-emption Capabilities

15. The first user equipment (121) according to claim 14, wherein the incoming call is a Mobile Originating, MO, Call, to the gateway node (130), and which MO call is converted to the EMLPP call from the gateway node (130) to the first user equipment (121).

16. The first user equipment (121) according to any of the claims 14-15, wherein the set of subscriber numbers are registered at a core network node, a Home Subscriber Server, HSS, or a Home Location register, HLR.

## Patentansprüche

1. Verfahren, das von einem Gateway-Knoten (130) durchgeführt wird, um einen eingehenden Anruf an eine erste Benutzereinrichtung (121) zu handhaben, wobei der Gateway-Knoten (130) die erste Benutzereinrichtung (121) in einem Abschlussnetz (101) bedient, wobei das Verfahren umfasst:
*Erhalten* (402) von Informationen darüber, ob sich der eingehende Anruf auf eine Teilnehmernummer bezieht, die in einem Satz von Teilnehmernummern enthalten ist, die von der ersten Benutzereinrichtung registriert wurden (121), oder nicht,
wenn sich der eingehende Anruf auf eine Teilnehmernummer bezieht, die in dem Satz von Teilnehmernummern enthalten ist, *Umwandeln* (403) des eingehenden Anrufs in einen erweiterten Mehrebenen-Vorrang- und Vorbelegungsdienstanruf, EMLPP-Anruf, im Abschlussnetz (101) am Gateway-Knoten (130),
wobei der EMLPP-Anruf ein priorisierter Anruf ist, der gegenüber anderen Anrufen im Abschlussnetz (101) Prioritätsmerkmale aufweist,
und wobei die Prioritätsmerkmale eines oder mehrere der folgenden Prioritätsmerkmale umfassen:
- kürzere Rufaufbauzeit
- Warteschlangenfähigkeiten
- Vorrangfähigkeiten
- Vorbelegungsfähigkeiten

2. Verfahren nach Anspruch 1, wobei der eingehende Anruf ein von einer Mobilstation ausgehender Anruf, MO-Anruf, ist und wobei das *Umwandeln* (403) des eingehenden Anrufs in einen EMLPP-Anruf das Umwandeln des MO-Anrufs in einen EMLPP-Anruf umfasst.

3. Verfahren nach einem der Ansprüche 1-2, wobei der eingehende Anruf in einem Ursprungsnetz (102) zwischen der zweiten Benutzereinrichtung (122) und dem Gateway-Knoten (130) nicht priorisiert wird.

4. Verfahren nach einem der Ansprüche 1-3, wobei das *Umwandeln* (403) des eingehenden Anrufs in den EMLPP-Anruf umfasst:
Setzen eines Prioritätsparameters in einer Nachricht, wobei der Prioritätsparameter angibt, dass der eingehende Anruf ein priorisierter Anruf ist und,
Senden der Nachricht über das Abschlussnetz an die erste Benutzereinrichtung (121).

5. Verfahren nach einem der Ansprüche 1-4, wobei die Information darüber, ob sich der eingehende Anruf auf eine Teilnehmernummer bezieht oder nicht, die in dem registrierten Satz von Teilnehmernummern enthalten ist, von einem Kernnetzknoten oder einem Heim-Teilnehmer-Server, HSS, erhalten wird.

6. Verfahren, das von einer ersten Benutzereinrichtung (121) durchgeführt wird, zum Empfangen eines eingehenden Anrufs von einer zweiten Benutzereinrichtung (122), wobei die erste Benutzereinrichtung (121) von einem Gateway-Knoten (130) in einem Abschlussnetz (101) bedient wird, wobei das Verfahren umfasst:
*Registrieren* (601) eines Satzes von Teilnehmernummern in einem Register (140), wobei der Satz von Teilnehmernummern von der ersten Benutzereinrichtung (121) ausgewählt wird, um priorisiert zu werden, wenn die erste Benutzereinrichtung (121) ein angerufener Teilnehmer ist, und
*Empfangen* (602) eines eingehenden Anrufs von der zweiten Benutzereinrichtung (122) über den Gateway-Knoten (130), wobei der eingehende Anruf in einen EMLPP-Anruf in dem Abschlussnetz (101) an dem Gateway-Knoten (130) umgewandelt wird, wenn der eingehende Anruf sich auf eine Teilnehmernummer bezieht, die in dem Satz von Teilnehmernummern enthalten ist, und wobei der eingehende Anruf in einem Ursprungsnetz (102) zwischen der zweiten Benutzereinrichtung (122) und dem Gateway-Knoten (130) nicht priorisiert wird,
wobei der EMLPP-Anruf ein priorisierter Anruf ist, der gegenüber anderen Anrufen im Abschlussnetz (101) Prioritätsmerkmale aufweist,
und wobei die Prioritätsmerkmale eines oder mehrere der folgenden Prioritätsmerkmale umfassen:
- kürzere Rufaufbauzeit
- Warteschlangenfähigkeiten
- Vorrangfähigkeiten
- Vorbelegungsfähigkeiten

7. Verfahren nach Anspruch 6, wobei der eingehende Anruf ein von einer Mobilstation ausgehender Anruf, MO-Anruf, zum Gateway-Knoten (130) ist, und wobei der MO-Anruf in den EMLPP-Anruf vom Gateway-Knoten (130) zur ersten Benutzereinrichtung (121) umgewandelt wird.

8. Verfahren nach einem der Ansprüche 6-7, wobei der Satz von Teilnehmernummern an einem Kernnetzknoten, einem Heim-Teilnehmer-Server, HSS, oder einem Heimatortsregister, HLR, registriert wird.

9. Gateway-Knoten (130) zum Handhaben eines eingehenden Anrufs an eine erste Benutzereinrichtung (121), wobei der Gateway-Knoten (130) dazu eingerichtet ist, die erste Benutzereinrichtung (121) in einem Abschlussnetz (101) zu bedienen, und der Gateway-Knoten (130) konfiguriert ist zum:
Erhalten von Informationen darüber, ob sich der eingehende Anruf auf eine Teilnehmernummer bezieht, die in einem registrierten Satz von Teilnehmernummern enthalten ist, die von der ersten Benutzereinrichtung registriert wurden (121), oder nicht,
wenn sich der eingehende Anruf auf eine Teilnehmernummer bezieht, die in dem registrierte Satz von Teilnehmernummern enthalten ist, Umwandeln des eingehenden Anrufs in einen erweiterten Mehrebenen-Vorrang- und Vorbelegungsdienstanruf, EMLPP-Anruf, im Abschlussnetz (101) am Gateway-Knoten (130),
wobei der EMLPP-Anruf ein priorisierter Anruf ist, der gegenüber anderen Anrufen im Abschlussnetz (101) Prioritätsmerkmale aufweist,
und wobei die Prioritätsmerkmale eines oder mehrere der folgenden Prioritätsmerkmale umfassen:
- kürzere Rufaufbauzeit
- Warteschlangenfähigkeiten
- Vorrangfähigkeiten
- Vorbelegungsfähigkeiten

10. Gateway-Knoten (130) nach Anspruch 9, wobei der eingehende Anruf ein von einer Mobilstation ausgehender Anruf, MO-Anruf, ist und wobei der Gateway-Knoten (130) konfiguriert ist zum:
Umwandeln des eingehenden Anrufs in einen EMLPP-Anruf, indem der MO-Anruf in einen EMLPP-Anruf umgewandelt wird.

11. Gateway-Knoten (130) nach einem der Ansprüche 9-10, wobei der eingehende Anruf so eingerichtet ist, dass er von einer zweiten Benutzereinrichtung (122) kommt, die ein anrufender Teilnehmer ist, und wobei der eingehende Anruf so eingerichtet ist, dass er in einem Ursprungsnetz (102) zwischen der zweiten Benutzereinrichtung (122) und dem Gateway-Knoten (130) nicht priorisiert wird.

12. Gateway-Knoten (130) nach einem der Ansprüche 9-11, wobei der Gateway-Knoten (130) dazu konfiguriert ist, den eingehenden Anruf in einen priorisierten Anruf umzuwandeln durch:
Setzen eines Prioritätsparameters in einer Nachricht, wobei der Prioritätsparameter angibt, dass der eingehende Anruf ein priorisierter Anruf ist und,
Senden der Nachricht über das Abschlussnetz an die erste Benutzereinrichtung (121).

13. Gateway-Knoten (130) nach einem der Ansprüche 9-12, wobei es eingerichtet ist, dass die Information darüber, ob sich der eingehende Anruf auf eine Teilnehmernummer bezieht, die in der registrierten Menge von Teilnehmernummern enthalten ist, oder nicht, von einem Kernnetzknoten, einem Heim-Teilnehmer-Server, HSS, oder einem Heimatortsregister, HLR, erhalten wird.

14. Erste Benutzereinrichtung (121) zum Empfangen eines eingehenden Anrufs von einer zweiten Benutzereinrichtung (122), wobei die erste Benutzereinrichtung (121) so eingerichtet ist, dass sie von einem Gateway-Knoten (130) in einem Abschlussnetz (101) bedient wird, und die erste Benutzereinrichtung (121) konfiguriert ist zum:
Registrieren eines Satzes von Teilnehmernummern in einem Register (140), wobei der Satz von Teilnehmernummern so eingerichtet ist, dass er von der ersten Benutzereinrichtung (121) ausgewählt wird, die priorisiert werden soll, wenn die erste Benutzereinrichtung (121) ein angerufener Teilnehmer ist, und
*Empfangen* eines eingehenden Anrufs von der zweiten Benutzereinrichtung (122) über den Gateway-Knoten (130), wobei der eingehende Anruf so eingerichtet ist, dass er in einen EMLPP-Anruf in dem Abschlussnetz (101) an dem Gateway-Knoten (130) umgewandelt wird, wenn der eingehende Anruf sich auf eine Teilnehmernummer bezieht, die in dem Satz von Teilnehmernummern enthalten ist, und wobei der eingehende Anruf dazu eingerichtet ist, in einem Ursprungsnetz (102) zwischen der zweiten Benutzereinrichtung (122) und dem Gateway-Knoten (130) nicht priorisiert zu werden,
wobei der EMLPP-Anruf dazu eingerichtet ist, ein priorisierter Anruf zu sein, der gegenüber anderen Anrufen im Abschlussnetz (101) Prioritätsmerkmale aufweist,
und wobei die Prioritätsmerkmale eines oder mehrere der folgenden Prioritätsmerkmale umfassen:
- kürzere Rufaufbauzeit
- Warteschlangenfähigkeiten
- Vorrangfähigkeiten
- Vorbelegungsfähigkeiten

15. Erste Benutzereinrichtung (121) nach Anspruch 14, wobei der eingehende Anruf ein von einer Mobilstation ausgehender Anruf, MO-Anruf, zum Gateway-Knoten (130) ist, und wobei der MO-Anruf in den EMLPP-Anruf vom Gateway-Knoten (130) zur ersten Benutzereinrichtung (121) umgewandelt wird.

16. Erste Benutzereinrichtung (121) nach einem der Ansprüche 14-15, wobei der Satz von Teilnehmernummern an einem Kernnetzknoten, einem Heim-Teilnehmer-Server, HSS, oder einem Heimatortregister, HLR, registriert wird.

## Revendications

1. Procédé mis en œuvre par un nœud de passerelle (130), pour la prise en charge d'un appel entrant sur un premier équipement utilisateur (121), lequel nœud de passerelle (130) dessert le premier équipement utilisateur (121) dans un réseau d'arrivée (101), le procédé comprenant :
*l'obtention* (402) d'informations concernant le fait de savoir si l'appel entrant se rapporte ou non à un numéro d'abonné qui est compris dans un ensemble de numéros d'abonné enregistrés par le premier équipement utilisateur (121),
lorsque l'appel entrant se rapporte à un numéro d'abonné qui est compris dans l'ensemble de numéros d'abonné, la *conversion* (403) de l'appel entrant en un appel de service de priorité et de préemption multi-niveau amélioré, EMLPP, dans le réseau d'arrivée (101) au niveau du nœud de passerelle (130), lequel appel EMLPP est un appel priorisé instaurant des caractéristiques prioritaires par rapport à d'autres appels dans le réseau d'arrivée (101),
et ces caractéristiques prioritaires comprenant l'une quelconque ou plusieurs quelconques parmi les caractéristiques prioritaires suivantes :
- temps d'établissement d'appel plus rapide
- capacités de mise en file d'attente
- capacités de précédence
- capacités de préemption

2. Procédé selon la revendication 1, dans lequel l'appel entrant est un appel provenant d'un mobile, MO, et dans lequel la *conversion* (403) de l'appel entrant en un appel EMLPP comprend la conversion de l'appel MO en un appel EMLPP.

3. Procédé selon l'une quelconque des revendications 1 ou 2, dans lequel l'appel entrant n'est pas priorisé dans un réseau d'origine (102) entre le deuxième équipement utilisateur (122) et le nœud de passerelle (130).

4. Procédé selon l'une quelconque des revendications 1 à 3, dans lequel la *conversion* (403) de l'appel entrant en l'appel EMLPP comprend :
la définition d'un paramètre de priorité dans un message, lequel paramètre de priorité indique que l'appel entrant est un appel priorisé et,
l'envoi du message par l'intermédiaire du réseau d'arrivée au premier équipement utilisateur (121).

5. Procédé selon l'une quelconque des revendications 1 à 4, dans lequel les informations concernant le fait de savoir si l'appel entrant se rapporte ou non à un numéro d'abonné qui est compris dans l'ensemble enregistré de numéros d'abonné, est obtenu depuis un nœud de réseau central ou un serveur d'abonné résidentiel, HSS.

6. Procédé mis en œuvre par un premier équipement utilisateur (121), pour recevoir un appel entrant depuis un deuxième équipement utilisateur (122), dans lequel le premier équipement utilisateur (121) est desservi par un nœud de passerelle (130) dans un réseau d'arrivée (101), le procédé comprenant :
*l'enregistrement* (601) d'un ensemble de numéros d'abonné dans un registre (140), lequel ensemble de numéros d'abonné sont sélectionnés par le premier équipement utilisateur (121) pour être priorisés lorsque le premier équipement utilisateur (121) est un correspondant appelé, et
la *réception* (602) d'un appel entrant depuis le deuxième équipement utilisateur (122) via le nœud de passerelle (130), lequel appel entrant est converti en un appel EMLPP dans le réseau d'arrivée (101) au niveau du nœud de passerelle (130) lorsque l'appel entrant se rapporte à un numéro d'abonné qui est compris dans l'ensemble de numéros d'abonné, et dans lequel l'appel entrant n'est pas priorisé dans un réseau d'origine (102) entre le deuxième équipement utilisateur (122) et le nœud de passerelle (130),
lequel appel EMLPP est un appel priorisé instaurant des caractéristiques prioritaires par rapport à d'autres appels dans le réseau d'arrivée (101),
et ces caractéristiques prioritaires comprenant l'une quelconque ou plusieurs quelconques parmi les caractéristiques prioritaires suivantes :
- temps d'établissement d'appel plus rapide
- capacités de mise en file d'attente
- capacités de précédence
- capacités de préemption

7. Procédé selon la revendication 6, dans lequel l'appel entrant est un appel provenant d'un mobile, MO, vers le nœud de passerelle (130), et lequel appel MO est converti en l'appel EMLPP depuis le nœud de passerelle (130) vers le premier équipement utilisateur (121).

8. Procédé selon l'une quelconque des revendications 6 ou 7, dans lequel l'ensemble de numéros d'abonné sont enregistrés au niveau d'un nœud de réseau central, un serveur d'abonné résidentiel, HSS, ou un enregistreur de localisation nominal, HLR.

9. Nœud de passerelle (130), pour la prise en charge un appel entrant vers un premier équipement utilisateur (121), lequel nœud de passerelle (130) est agencé pour desservir le premier équipement utilisateur (121) dans un réseau d'arrivée (101), et le nœud de passerelle (130) est configuré pour :
obtenir des informations concernant le fait de savoir si l'appel entrant se rapporte ou non à un numéro d'abonné qui est compris dans un ensemble enregistré de numéros d'abonné enregistrés par le premier équipement utilisateur (121),
lorsque l'appel entrant se rapporte à un numéro d'abonné qui est compris dans l'ensemble enregistré de numéros d'abonné, convertir l'appel entrant en un appel de service de priorité et de préemption multi-niveau amélioré, EMLPP, dans le réseau d'arrivée (101) au niveau du nœud de passerelle (130),
lequel appel EMLPP est un appel priorisé instaurant des caractéristiques prioritaires par rapport à d'autres appels dans le réseau d'arrivée (101),
et ces caractéristiques prioritaires comprenant l'une quelconque ou plusieurs quelconques parmi les caractéristiques prioritaires suivantes :
- temps d'établissement d'appel plus rapide
- capacités de mise en file d'attente
- capacités de précédence
- capacités de préemption

10. Nœud de passerelle (130) selon la revendication 9, dans lequel l'appel entrant est un appel provenant d'un mobile, MO, et dans lequel le nœud de passerelle (130) est configuré pour : convertir l'appel entrant en un appel EMLPP en convertissant l'appel MO en un appel EMLPP.

11. Nœud de passerelle (130) selon l'une quelconque des revendications 9 ou 10, dans lequel l'appel entrant est agencé pour provenir d'un deuxième équipement utilisateur (122) étant un correspondant appelant, et dans lequel l'appel entrant est agencé pour ne pas être priorisé dans un réseau d'origine (102) entre le deuxième équipement utilisateur (122) et le nœud de passerelle (130).

12. Nœud de passerelle (130) selon l'une quelconque des revendications 9 à 11, le nœud de passerelle (130) étant configuré pour convertir l'appel entrant en un appel priorisé par :
la définition d'un paramètre de priorité dans un message, lequel paramètre de priorité indique que l'appel entrant est un appel priorisé et,
l'envoi du message par l'intermédiaire du réseau d'arrivée au premier équipement utilisateur (121).

13. Nœud de passerelle (130) selon l'une quelconque des revendications 9 à 12, dans lequel les informations concernant le fait de savoir si l'appel entrant se rapporte ou non à un numéro d'abonné qui est compris dans l'ensemble enregistré de numéros d'abonné, sont agencées pour être obtenues auprès d'un nœud de réseau central, un serveur d'abonné résidentiel, HSS, ou un enregistreur de localisation nominal, HLR.

14. Premier équipement utilisateur (121) pour recevoir un appel entrant depuis un deuxième équipement utilisateur (122), dans lequel le premier équipement utilisateur (121) est agencé pour être desservi par un nœud de passerelle (130) dans un réseau d'arrivée (101), et le premier équipement utilisateur (121) est configuré pour :
enregistrer un ensemble de numéros d'abonné dans un registre (140), lequel ensemble de numéros d'abonné sont agencés pour être sélectionnés par le premier équipement utilisateur (121) pour être priorisés lorsque le premier équipement utilisateur (121) est un correspondant appelé, et recevoir un appel entrant depuis le deuxième équipement utilisateur (122) via le nœud de passerelle (130), lequel appel entrant est agencé pour être converti en un appel EMLPP dans le réseau d'arrivée (101) au niveau du nœud de passerelle (130) lorsque l'appel entrant se rapporte à un numéro d'abonné qui est compris dans l'ensemble de numéros d'abonné, et dans lequel l'appel entrant est agencé pour ne pas être priorisé dans un réseau d'origine (102) entre le deuxième équipement utilisateur (122) et le nœud de passerelle (130),
lequel appel EMLPP est agencé pour être un appel priorisé instaurant des caractéristiques prioritaires par rapport à d'autres appels dans le réseau d'arrivée (101),
et ces caractéristiques prioritaires comprenant l'une quelconque ou plusieurs quelconques parmi les caractéristiques prioritaires suivantes :
- temps d'établissement d'appel plus rapide
- capacités de mise en file d'attente
- capacités de précédence
- capacités de préemption

15. Premier équipement utilisateur (121) selon la revendication 14, dans lequel l'appel entrant est un appel provenant d'un mobile, MO, vers le nœud de passerelle (130), et lequel appel MO est converti en l'appel EMLPP depuis le nœud de passerelle (130) vers le premier équipement utilisateur (121).

16. Premier équipement utilisateur (121) selon l'une quelconque des revendications 14 ou 15, dans lequel l'ensemble de numéros d'abonné sont enregistrés au niveau d'un nœud de réseau central, un serveur d'abonné résidentiel, HSS, ou un enregistreur de localisation nominal, HLR.
